# EUROPEAN PATENT SPECIFICATION

(11) **EP 3 506 996 B1**
(45) Date of publication and mention of the grant of the patent: **17.06.2020**
(21) Application number: 17752197.8
(22) Date of filing: 18.07.2017
(51) Int. Cl.: B01D 61/12, B01D 63/12

(54) **SPIRAL WOUND MODULE ASSEMBLY INCLUDING INTEGRATED PERMEATE MONITORING**
SPIRALFÖRMIGE WICKELMODULANORDNUNG MIT INTEGRIERTER PERMEATSMESSZELLE
ENSEMBLE DE MODULE ENROULÉ EN SPIRALE COMPRENANT UNE SURVEILLANCE DE PERMÉAT INTÉGRÉE

(30) Priority: 31.08.2016 US 201662382211 P
(43) Date of publication of application: 10.07.2019
(73) Proprietor: DDP Specialty Electronic Materials US, Inc., Wilmington, DE 19805 (US)
(72) Inventor: JONS, Steven D., Minneapolis MN 55439 (US); FRANKLIN, Luke, Minneapolis MN 55439 (US)
(74) Representative: Houghton, Mark Phillip
(86) International application number: PCT/US2017/042530
(87) International publication number: WO 2018/044407

(56) References cited:
- US-A1- 2007 209 977
- US-A1- 2014 180 610

## Description

### FIELD

The invention relates to a method and apparatus for monitoring the fluid quality of spiral wound module assemblies.

### INTRODUCTION

Spiral wound membrane assemblies are used in a wide variety of fluid separations. In a conventional embodiment, one or more spiral wound reverse osmosis (RO) or nano-filtration (NF) membrane modules ("elements") are serially connected within a common pressure vessel. Large scale water treatment facilities typically include multiple trains and/or stages of vessels, each including from 6-8 spiral wound modules. Given that the modules are sealed with pressure vessels, monitoring module performance is a challenge. A variety of techniques have been developed, including the use of retractable probes, e.g. US8272251 and US821 0042 these approach require the use of specialized equipment along with an access point in the vessel - which complicates vessel fabrication and can lead to leaks. Other techniques require the use of sensors and interconnecting wires to be located within the permeate tubes of the modules, such as US201619932. This complicates module fabrication and disrupts permeate flow through the permeate tubes.

Less complicated monitoring schemes are required. In particular, monitoring systems are desired that require little to no modification of existing modules and pressure vessel designs and which avoid the use of retractable probes.

### SUMMARY

The invention includes a spiral wound module assembly, its method of use and combinations of such assemblies. In a preferred embodiment, the subject spiral wound module assembly (39) includes:
a pressure vessel (40) comprising: a chamber (41) extending along an axis (X) between a first end (38) and a second end (38'), at least one feed inlet port (42), concentrate outlet port (42') and permeate outlet port (44), and a removable end plate (54) located at the first end (38) of the vessel, wherein the permeate outlet port (44) extends axially through the removable end plate (54);
a plurality of spiral wound modules (2, 2') axially aligned in serial arrangement within the chamber (41) with a first module (2) located adjacent the first end (38) and a second module (2') located adjacent the second end (38'), wherein each spiral wound module (2, 2') comprises at least one membrane envelope (4) wound about a permeate collection tube (8) and wherein the permeate collection tubes (8) of each spiral wound module (2, 2') are in sealed fluid communication with each other;
a permeate adaptor tube (52) in sealed fluid communication with the permeate collection tube (8) of the first spiral wound module (2) and the permeate outlet port (44), wherein the permeate adaptor tube (52) defines an inner periphery (58) adapted to contain permeate;
a gap space (56) located between the first spiral wound module (2) and the first end (38); and a monitoring system comprising: a first set of sensors (60) in contact with the inner periphery (58) of the permeate adaptor tube (52); and a micro-processing unit (62) located in the gap space (56) and connected to the first set of sensors (60) by a first set of wires (64). In a preferred sub-embodiment, the first set of wires (64) are located outside of the inner periphery (58) of the permeate adaptor tube (52). Many additional embodiments are described.

### BRIEF DESCRIPTION OF THE DRAWINGS

The figures are not to scale and include idealized views to facilitate description. Where possible, like numerals have been used throughout the figures and written description to designate the same or similar features.
Figure 1 is a perspective, partially cut-away view of a spiral wound module.
Figure 2 is a cross-sectional view of typically spiral wound module assembly including a plurality of spiral wound modules axially aligned in a serial relationship within a pressure vessel.
Figure 3 is a schematic view of a plurality of spiral wound module assemblies arranged in a parallel configuration as part of a filtration system.
Figure 4 is an enlarged, cross-sectional, partially cut-away view showing a monitoring system of the present invention located within the assembly of Figure 2.
Figure 5 is an enlarged, cross-sectional, partially cut-away view showing an alternative embodiment of a monitoring system.

### DETAILED DESCRIPTION

The present invention includes a spiral wound module suitable for use in reverse osmosis (RO) and nanofiltration (NF) systems. Such modules include one or more RO or NF membrane envelops and feed spacer sheets wound about a permeate collection tube. RO membranes used to form envelops are relatively impermeable to virtually all dissolved salts and typically reject more than about 95% of salts having monovalent ions such as sodium chloride. RO membranes also typically reject more than about 95% of inorganic molecules as well as organic molecules with molecular weights greater than approximately 100 Daltons. NF membranes are more permeable than RO membranes and typically reject less than about 95% of salts having monovalent ions while rejecting more than about 50% (and often more than 90%) of salts having divalent ions - depending upon the species of divalent ion. NF membranes also typically reject particles in the nanometer range as well as organic molecules having molecular weights greater than approximately 200 to 500 Daltons. For purposes of this description, the term "hyperfiltration" encompasses both RO and NF.

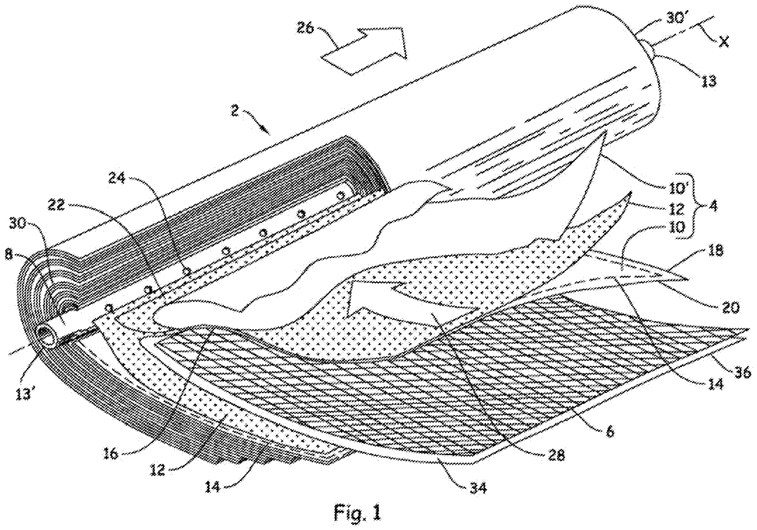

A representative spiral wound membrane module is generally shown at 2 in Figure 1. The module (2) is formed by concentrically winding one or more membrane envelopes (4) and optional feed spacer sheet(s) ("feed spacers ") (6) about a permeate collection tube (8). The permeate collection tube (8) has length extending between an opposing first and second end (13', 13) and includes a plurality of openings (24) along a portion of its length. Each membrane envelope (4) preferably comprises two substantially rectangular sections of membrane sheet (10, 10'). Each section of membrane sheet (10, 10') has a membrane or front side (34) and support or back side (36). The membrane envelope (4) is formed by overlaying membrane sheets (10, 10') and aligning their edges. In a preferred embodiment, the sections (10, 10') of membrane sheet surround a permeate spacer sheet (12). This sandwich-type structure is secured together, e.g. by sealant (14), along three edges (16, 18, 20) to form an envelope (4) while a fourth edge, i.e. "proximal edge" (22) abuts the permeate collection tube (8) so that the inside portion of the envelope (4) (and optional permeate spacer (12)) is in fluid communication with the openings (24) extending along a portion of the length of the permeate collection tube (8). The module (2) may include a single envelope or a plurality of membrane envelopes (4) each separated by a feed spacer sheet (6). In the illustrated embodiment, membrane envelopes (4) are formed by joining the back side (36) surfaces of adjacently positioned membrane leaf packets. A membrane leaf packet comprises a substantially rectangular membrane sheet (10) folded upon itself to define two membrane "leaves" wherein the front sides (34) of each leaf are facing each other and the fold is axially aligned with the proximal edge (22) of the membrane envelope (4), i.e. parallel with the permeate collection tube (8). A feed spacer sheet (6) is shown located between facing front sides (34) of the folded membrane sheet (10). The feed spacer sheet (6) facilitates flow of feed fluid through the module (2). While not shown, additional intermediate layers may also be included in the assembly. Representative examples of membrane leaf packets and their fabrication are further described in US 7875177 to Haynes et al.

During module fabrication, permeate spacer sheets (12) may be attached about the circumference of the permeate collection tube (8) with membrane leaf packets interleaved therebetween. The back sides (36) of adjacently positioned membrane leaves (10, 10') are sealed about portions of their periphery (16, 18, 20) to enclose the permeate spacer sheet (12) and to form a membrane envelope (4). Suitable techniques for attaching the permeate spacer sheet to the permeate collection tube are described in US 5538642 to Solie. The membrane envelope(s) (4) and feed spacer(s) (6) are wound or "rolled" concentrically about the permeate collection tube (8) to form two opposing scroll faces (inlet scroll face and outlet scroll face). The resulting spiral bundle is held in place by tape or other means. The scroll faces of the module may then be trimmed and a sealant may optionally be applied at the junction between the scroll face and permeate collection tube (8) as described in US 7951295 to Larson et al. The ends of the module, e.g. inlet end (30) and outlet end (30'), may either be an exposed scroll face or comprise an anti-telescoping device (or "end cap"), as is common in the art. Examples are described in US6632356. An impermeable layer such as tape may be wound about the circumference of the wound module as described in US 8142588 to McCollam. In alternative embodiments, a porous tape or fiberglass coating may be applied to the module's periphery.

In operation pressurized feed liquid (water) enters the module (2) at the inlet end (30) and flows in a generally axial direction through the module and exits as concentrate at the outlet end (30') in the direction shown by arrow (26). Permeate flows along a permeate flow path generally shown by arrow (28) which extends through the membrane (10, 10') and into the membrane envelope (4) where it flows into the openings (24), through the permeate collection tube (8) and exits the second end (13) of the tube (8) at the outlet scroll face (32). The first end (13') of the permeate collection tube (8) is preferably sealed to prevent fluid flow therethrough.

Materials for constructing various components of spiral wound modules are well known in the art. Suitable sealants for sealing membrane envelopes include urethanes, epoxies, silicones, acrylates, hot melt adhesives and UV curable adhesives. While less common, other sealing means may also be used such as application of heat, pressure, ultrasonic welding and tape. Permeate collection tubes are typically made from plastic materials such as acrylonitrile-butadiene-styrene, polyvinyl chloride, polysulfone, poly (phenylene oxide), polystyrene, polypropylene, polyethylene or the like. Tricot polyester materials are commonly used as permeate spacers. In some modules, the permeate collection tube comprises multiple sections and these may be joined together, such as by adhesive or spin welding. Additional permeate spacers are described in US 8388848.

The membrane sheet is not particularly limited and a wide variety of materials may be used, e.g. cellulose acetate materials, polysulfone, polyether sulfone, polyamides, polysulfonamide, polyvinylidene fluoride, etc. A preferred membrane is a three layer composite comprising 1) a backing layer (back side) of a nonwoven backing web (e.g. a non-woven fabric such as polyester fiber fabric available from Awa Paper Company), 2) a middle layer comprising a porous support having a typical thickness of about 25-125 µm and 3) a top discriminating layer (front side) comprising a thin film polyamide layer having a thickness typically less than about 1 micron, e.g. from 0.01 micron to 1 micron but more commonly from about 0.01 to 0.1 µm. The backing layer is not particularly limited but preferably comprises a non-woven fabric or fibrous web mat including fibers which may be orientated. Alternatively, a woven fabric such as sail cloth may be used. Representative examples are described in US 4,214,994; US 4,795,559; US 5,435,957; US 5,919,026; US 6,156,680; US 2008/0295951 and US 7,048,855. The porous support is typically a polymeric material having pore sizes which are of sufficient size to permit essentially unrestricted passage of permeate but not large enough so as to interfere with the bridging over of a thin film polyamide layer formed thereon. For example, the pore size of the support preferably ranges from about 0.001 to 0.5 µm. Non-limiting examples of porous supports include those made of: polysulfone, polyether sulfone, polyimide, polyamide, polyetherimide, polyacrylonitrile, poly(methyl methacrylate), polyethylene, polypropylene, and various halogenated polymers such as polyvinylidene fluoride. The discriminating layer is preferably formed by an interfacial polycondensation reaction between a polyfunctional amine monomer and a polyfunctional acyl halide monomer upon the surface of the microporous polymer layer.

The proto-typical membranes for reverse osmosis are FilmTec Corporation's FT-30™ type membranes, made by reaction of m-phenylene diamine and trimesoyl chloride. This and other interfacial polycondensation reactions are described in several sources (e.g. US 4277344 and US 6878278). The polyamide membrane layer may be prepared by interfacially polymerizing a polyfunctional amine monomer with a polyfunctional acyl halide monomer, (wherein each term is intended to refer both to the use of a single species or multiple species), on at least one surface of a porous support. As used herein, the term "polyamide" refers to a polymer in which amide linkages (-C(O)NH-) occur along the molecular chain. The polyfunctional amine and polyfunctional acyl halide monomers are most commonly applied to the porous support by way of a coating step from solution, wherein the polyfunctional amine monomer is typically coated from an aqueous-based or polar solution and the polyfunctional acyl halide from an organic-based or non-polar solution.

In operation, one or more (e.g. typically 6-10) spiral wound modules are housed within a pressure vessel which collectively defines a spiral wound assembly. The vessel includes a feed inlet port, concentrate outlet port and permeate outlet port. The feed inlet port is adapted for connection with a pressurized source of feed liquid. The concentrate outlet port is adapted for connection to a pathway for re-use or disposal. The permeate outlet port is adapted for connection to a pathway for storage, use, or further treatment. Pressure vessels used in the present invention are not particularly limited but preferably include a solid structure capable of withstanding pressures associated with operating conditions. The vessel structure preferably includes a chamber having an inner periphery corresponding in size and shape to that of the outer periphery of the spiral wound modules to be housed therein. The orientation of the pressure vessel is not particularly limited, e.g. both horizontal and vertical orientations may be used. Examples of applicable pressure vessels, module arrangements and loading are described in: US 6074595, US 6165303, US 6299772 and US 2008/0308504. Manufacturers of pressure vessels for large systems include Pentair of Minneapolis MN, Bekaert of Vista CA and Bel Composite of Beer Sheva, Israel.

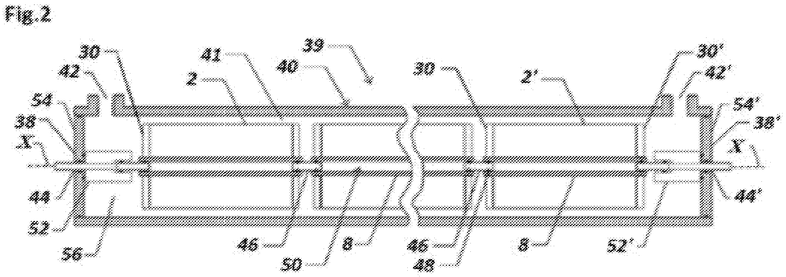

A typically embodiment of a spiral wound module assembly is generally shown at 39 in Figure 2. As shown, the assembly includes a plurality of spiral wound modules (2, 2') axially aligned (along axis X) in a serial arrangement within a pressurizable chamber (41) of a pressure vessel (40). The permeate collection tubes (8) of adjacent modules (2, 2') are joined by interconnectors (46) with a permeate seal (48). The effect of the joined tubes (8) is to define a combined permeate collection region (50) for the vessel (40). The pressure vessel (40) extends along a central axis (X) between a first and second end (38, 38'). The vessel (40) includes a removable end plate (54) located at one end (38) of the vessel (40). Removal of the end plate (54) allows the chamber (41) to be loaded and unloaded with modules (2). In an alternative embodiment, removable end plates (54, 54') may be located at each end (38, 38'). The vessel (40) includes several fluid ports (42, 42', 44, and 44'), e.g. at least one feed inlet port (42), concentrate outlet port (42') and permeate outlet port (44). Additional ports may be included, e.g. feed inlet ports, concentrate outlet ports and permeate outlet ports (44, 44') at each end (38, 38') of the vessel. Similarly, the feed inlet and concentrate outlet ports may be provided in reversed orientation from that shown in Fig. 2. For simplicity of description, the feed inlet and concentrate outlet ports may be generically referenced by port (42/42'). While shown in a radial configuration, one or more feed and concentrate ports may assume an axial configuration extending through the ends (38, 38') of the vessel (40). A gap space (56) is located within the chamber (41) between the end (38) of the vessel (40) and nearest module. A permeate adapter tube (52) is in sealed fluid communication with the permeate collection tube (8) of the nearest spiral wound module and the permeate outlet port (44). The permeate adapter tube (52) provides a route for permeate to pass from the permeate collection region (50) and exit the vessel (40). In the embodiment of Figure 2, gap spaces (56, 56') are shown near both ends (38, 38') of the vessel along with corresponding permeate adaptor tubes (52, 52').

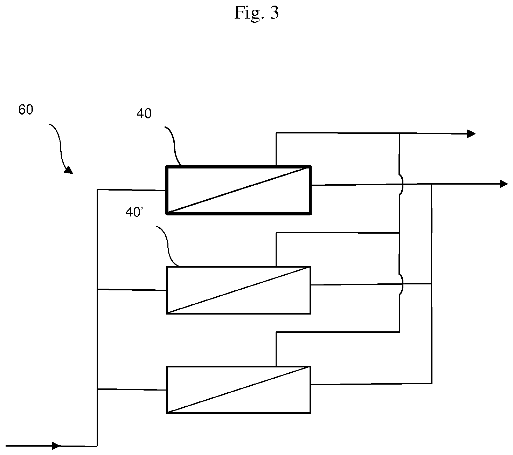

A pressure vessel (40) is often combined in series or parallel with other pressure vessels (40') as part of larger filtration system. As illustrated in Fig. 3, parallel vessels (40,40') in a separation system are often arranged so that streams for feed fluid, reject fluid, and permeate fluid on one vessel (40) are joined to corresponding streams of another adjacent vessel (40'). Physically, vessels in a common stage of the filtration system are often stacked into two-dimensionally parallel arrays.

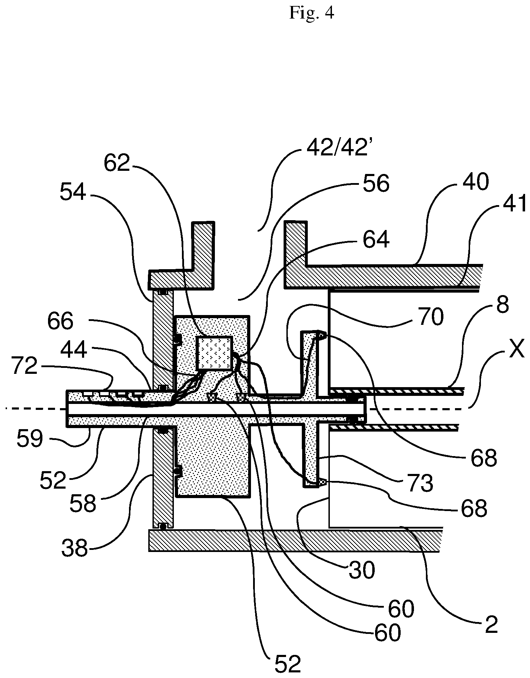

A preferred embodiment of the invention is illustrated in Figure 4. As with the generic embodiment shown in Figure 2, the spiral wound module assembly includes: a pressure vessel (40) comprising: a chamber (41) extending along an axis (X) between a first end (38) and a second end (38'), at least one feed inlet port and concentrate outlet port (42/42') and permeate outlet port (44), and a removable end plate (54) located at the first end (38) of the vessel. The permeate outlet port (44) extends axially through the removable end plate (54), preferably along the central axis (X). The assembly further includes a plurality of spiral wound modules (2, 2') axially aligned in serial arrangement within the chamber (41) with a first module (2) located adjacent the first end (38) and a second module (2') located adjacent the second end (38'). The terms "first" and "second" are only intended to refer to the outermost modules, i.e. those located nearest to the ends (38, 38') of the vessel (40). In preferred embodiments, the assembly includes at least two, but preferably at least three serially arranged spiral wound modules. Each spiral wound module (2, 2') comprises at least one membrane envelope (4) wound about a permeate collection tube (8) and wherein the permeate collection tubes (8) of each spiral wound module (2, 2') are in sealed fluid communication with each other. A gap space (56) is located between the first spiral wound module (2) and the first end (38); and a permeate adaptor tube (52) is in sealed fluid communication with the permeate collection tube (8) of the first spiral wound module (2) and the permeate outlet port (44). The permeate adapter tube (52) may be a single integral unit or it may comprise a plurality of parts that join to form a sealed inner periphery (58) between the nearest module (2) and the permeate outlet port (44). For instance, the permeate adapter tube (52) illustrated in Fig. 2 includes a first part that comprises a permeate pipe passing through the permeate outlet port (44) into the vessel (40) and a second mating part that comprises a connection to the permeate collection tube (8) of the nearest module (2). The two parts are illustrated as sealed by an o-ring.

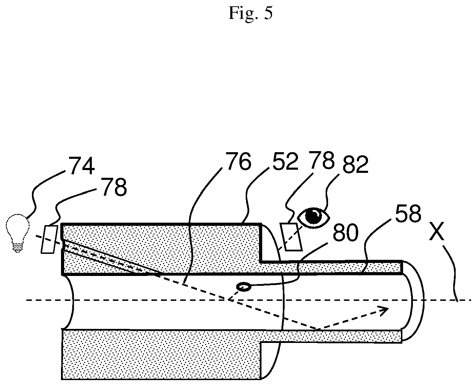

The assembly is characterized by including a monitoring system including: a first set (e.g. preferably at least two) of sensors (60) in contact with the inner periphery (58) of the permeate adaptor tube (52). In preferred embodiments, the sensors (60) are fixed to the inner periphery (58) or embedded into the adaptor tube (52) such that the sensors contact permeate passing through the inner periphery (58). As will be described with reference to fluorescence sensors of Figure 5, the sensors may also be located at a remote location so long as the sensor remains in "visual" contact with the inner periphery (58) such that the permeate can be "sensed" or analyzed by the sensor. In some embodiments, the inner periphery (58) of the permeate adaptor tube may surround a bypass region (not shown) with reduced flow adjacent the sensor (60). The monitoring system further includes a micro-processing unit (62) located in the gap space (56) and connected to the first set of sensors (60) by a first set of wires (64).
The micro-processing unit (62) is not particularly limited and applicable examples include an autonomous integrated circuit as AD5931 from Analog Devices and integrated circuits such a model CC2430 or CC2530 from Texas Instruments. Further examples include Arduino and Raspberry Pi boards. The micro-processing unit preferably includes flash memory for storing protocol, control functions and data. Preferably, the micro-processor unit (62) is encapsulated in potting material and joined to the permeate adapter tube (52). The micro-processing unit (62) is preferably secured to at least one of the removable end plate (38) and permeate adaptor tube (52). Importantly, the micro-processor unit is not located within the permeate collection tubes (8) of the modules (2); nor is the micro-processor unit located outside the chamber (41). That is, preferred embodiments of the invention avoid locating any portion of the monitoring system within the modules (2) - including their permeate collection tubes (8). In order to reduce the number of wires extending from outside the vessel to the sensors within the vessel, the micro-processing unit (62) is located within the vessel (40) and preferably within the gap space (56). As a consequence, fewer wires are required to pass from outside the vessel to the chamber (41). This arrangement simplifies the design and reduces the amount of monitoring-related structure located within the inner periphery (58) of the permeate adaptor tube (52). In furtherance of this objective, the first set of wires (64) are preferably located outside of the inner periphery (58) of the permeate adaptor tube (52). The micro-processing unit (62) is connected to a second set of wires (66) extending through the removable end plate (58) which are adapted for connection with a power source and/or central receiving computer or like device located outside the chamber (41) of the vessel (40). The second set of wires (66) may extend along the inner periphery (58) of the permeate adaptor tube (52) or extend through an orifice provided in the removable end plate or the radial side of the vessel (not shown). In one embodiment, the second set of wires (66) are located within the inner periphery (58) of the permeate adapter tube (52) while they pass through the permeate outlet port (4). In another embodiment, the second set of wires (66) are located between an inner periphery (58) and an outer periphery (59) of the permeate adapter tube (52) while they pass through the permeate outlet port (4) In still another embodiment, the second set of wires (66) passes through the permeate outlet port (4) while they are located external to the outer periphery (59) of the permeate adapter tube (52). In one preferred embodiment, the second set of wires (66) extends from the micro-processing unit (62) to a plurality of electrical connectors (72) located on the permeate adaptor tube (52) that are adapted for connection with a power source and/or central processing unit (e.g. computer) located outside the chamber (41) of the vessel (40). The second set of wires (66) may connected directly to an external computer or be connected to an antenna that communicates with an external computer. An antenna for communicating with an external computer is preferably connected to the permeate adapter tube (52). In another preferred embodiment, the second set of wires (66) are joined to connectors (72) at a location outside the chamber (41) and the second set of wires (66) extend from the outer periphery (59) of the permeate adapter tube (52).

While not shown, the power source and central processing unit may include a database for storing data collected from the sensors along with algorithms for interpreting and presenting such data. In this way, multiple spiral wound assemblies of the present invention may share a common power source and/or central processing unit. Such an embodiment allows for effective monitoring of large treatment facilities that include a plurality of spiral wound module assemblies. In one specific set of embodiments, the second sets of wires of multiple spiral wound assemblies (e.g. adjacently positioned assemblies) are connected outside of their respective vessels and are connected to a common power source and/or central processing unit.

The monitoring system may further include a second set of sensors (68) located in the gap space (56) outside the inner periphery (58) of the permeate adaptor tube (52). The second set of sensors may be secured in place by way of positioning arms (73) extending radially from the permeate adaptor tube (52). The second set of sensors (preferably two or more) may be located in a fluid flow pattern extending from the first spiral wound element (2) to at least one of the feed inlet port (42) and concentrate outlet port (42'). Preferably, the positioning arm (73) locates at least one of the second set of sensors (68) adjacent the closest module end (30) of the spiral wound module (2). The second set of sensors (68) are connected to the micro-processing unit (62) by way of a third set of wires (70) which are located outside of the inner periphery (58) of the permeate adaptor tube (52).

Figure 5 illustrates another embodiment of the invention wherein the first of sensors rely upon fluorescence. In this embodiment, the monitoring system further includes a light source (74), e.g. LED, laser, etc. and a corresponding light sensitive set of sensors (82). When monitoring the quality of the permeate, the sensors (e.g. photodiode, photo voltaic cell, photo resistor, photo multiplier) may be located in the inner periphery (58) of the permeate adaptor tube (52), or at a remote location as shown but including a light transparent "window" or aperture (80) for providing access or visual "contact" with permeate passing through the inner periphery (58) of the permeate adaptor tube (52). Alternatively, the sensors may be located in a position as described with respect to the second set of sensors in connection with Figure 4. Both the light source (74) and light sensor (82) are preferably affixed to the permeate adapter tube (52), but more preferably embedded within it. In some embodiments, the light source (74) provides an excitation light beam (76) that passes through the inner periphery (58) at an angle of less than 70°, preferably less than 45° with the central axis (X). In this way, this light may be dissipated into the combined permeate collection region (50), and scattered light reflected into the sensor (82) is reduced. Scatter may also be reduced by providing a light transparent window or aperture (80) that limits the region from which emitted or scattered light might be detected by the sensor. Preferably, optical filters (78), (e.g. short pass or bandpass for excitation, band pass or long pass for emission), are provided for the excitation and/or emitted light to further reduce scatter detected by the sensor. In some embodiments, multiple light sources, optical filters, or sensor types allow the monitoring system to perform fluorescence measurements with more than one combination of excitation and emission wavelengths. In a preferred embodiment, the micro-processing unit gates the detection of fluorescence to collect signal during a time after an excitation light pulse.

The sensors used in the present invention are not particularly limited and include those described in the literature for use in monitoring the quality of feed, concentration and permeate of spiral wound modules assemblies may be used. In general, applicable sensors include those that measure conductivity, pressure, flow, voltammetry and/or temperature. Applicable sensors include: optical sensors (e.g. fluorescence, absorption, turbidity, particle counting, etc.) and audio sensors (including sensors ultrasound waves), and sensors using radio waves. Example flow sensors include those based on changes in temperature changes caused by moving water, such as heating a resistor in contact with the moving water. (See for example sensors described at: https://www.sensirion.com/technology/liquid-flow. Other sensors for measuring fluid flow may be based on detecting the magnitude of deflection caused by water moving across one or more extending pliable members or filaments. The fluid flow may also be measured based on a pressure drop across an orifice or flow path. Flow may also be determined from the movement of a rotor or impeller. Sensors may also be used to measure relative water flow rate (or velocity) within the inner periphery of the permeate tube adapter or within the gaps space outside the inner periphery. In yet another embodiment, the first set of sensors (e.g. electrodes) may be coated to improve sensitive to divalent ions compared to monovalent ions present in the permeate.

As mentioned sensors based upon optics, audio and radio waves (e.g. piezo device) may be used to determine the distance between different modules within the vessel. In one embodiment, sensors may be used to transmit both a pulse of light and pulse of sound at the same time. Based on the time differences these signal take to reach the permeate adapter tube, the distance to a module may be calculated. Sound, light, or radio waves transmitted from the sensor may also encode information, such as the serial number of the module, conditions of permeate, feed, or reject fluids, and/or flow rates.

In yet another embodiment, the micro-processing unit (62) may also be connected to conductivity sensors mounted on a probe that extends into the permeate tubes (8) of multiple modules (2) within the vessel (40). See for example the probe described in US8272251.

The micro-processing unit (62) may generate and supply to sensors a signal with variable voltage and/or variable frequency, such as for voltammetry.

## Claims

1. A spiral wound module assembly (39) comprising:
a pressure vessel (40) comprising: a chamber (41) extending along an axis (X) between a first end (38) and a second end (38'), at least one feed inlet port (42), concentrate outlet port (42') and permeate outlet port (44), and a removable end plate (54) located at the first end (38) of the vessel, wherein the permeate outlet port (44) extends axially through the removable end plate (54);
a plurality of spiral wound modules (2, 2') axially aligned in serial arrangement within the chamber (41) with a first module (2) located adjacent the first end (38) and a second module (2') located adjacent the second end (38'), wherein each spiral wound module (2, 2') comprises at least one membrane envelope (4) wound about a permeate collection tube (8) and wherein the permeate collection tubes (8) of each spiral wound module (2, 2') are in sealed fluid communication with each other;
a permeate adaptor tube (52) in sealed fluid communication with the permeate collection tube (8) of the first spiral wound module (2) and the permeate outlet port (44), wherein the permeate adaptor tube (52) defines an inner periphery (58) adapted to contain permeate; and
a gap space (56) located between the first spiral wound module (2) and the first end (38); wherein the assembly is **characterized by** including a monitoring system comprising:
a first set of sensors (60) in contact with the inner periphery (58) of the permeate adaptor tube (52); and
a micro-processing unit (62) located in the gap space (56) and connected to the first set of sensors (60) by a first set of wires (64).

2. The assembly of claim 1 wherein the first set of wires (64) are located outside of the inner periphery (58) of the permeate adaptor tube (52).

3. The assembly of claim 1 wherein the micro-processing unit (62) is connected to a second set of wires (66) extending through the removable end plate (54) and adapted for connection with a power source located outside the chamber (41) of the vessel (40).

4. The assembly of claim 3 wherein the second set of wires (66) extends along the inner periphery (58) of the permeate adaptor tube (52).

5. The assembly of claim 3 wherein the second set of wires (66) extend through an orifice provided in the removable end plate (54).

6. The assembly of claim 2 wherein the second set of wires (66) extend from the micro-processing unit (62) to a plurality of connectors (72), and wherein the connectors are located on the permeate adaptor tube (52) and are adapted for connection with a power source located outside the chamber (41) of the vessel (40).

7. The assembly of claim 1 wherein the micro-processing unit (62) is secured to at least one of the removable end plate (38) and permeate adaptor tube (52).

8. The assembly of claim 1 wherein monitoring system further comprises a second set of sensors (68) located in the gap space (56) outside the inner periphery (58) of the permeate adaptor tube (52), wherein the second set of sensors (68) are located in a fluid flow pattern extending from the first spiral wound element (2) to at least one of the feed inlet port (42) and concentrate outlet port (42').

9. The assembly of claim 8 wherein the second set of sensors (68) are connected to the micro-processing unit (62) by way of a third set of wires (70), and wherein the third set of wires (70) are located outside of the inner periphery (58) of the permeate adaptor tube (52).

10. The assembly of claim 1 further include a plurality of individual spiral wound assemblies according to claim 1 wherein the micro-processing units (62) of each spiral wound assembly are connected to a common central processing unit.

## Patentansprüche

1. Spiralförmige Wickelmodulanordnung (39), umfassend:
einen Druckbehälter (40), umfassend: eine Kammer (41), welche sich entlang einer Achse (X) zwischen einem ersten Ende (38) und einem zweiten Ende (38') erstreckt, mindestens eine Zuführeinlassöffnung (42), eine Konzentratauslassöffnung (42') und eine Permeatsauslassöffnung (44) und eine abnehmbare Endplatte (54), welche an dem ersten Ende (38) des Behälters angeordnet ist, wobei die Permeatsauslassöffnung (44) sich axial durch die abnehmbare Endplatte (54) erstreckt;
eine Mehrzahl von spiralförmigen Wickelmodulen (2, 2'), welche in Reihenanordnung axial innerhalb der Kammer (41) ausgerichtet sind, wobei ein erstes Modul (2) an dem ersten Ende (38) und ein zweites Modul (2') an dem zweiten Ende (38') anliegend angeordnet ist, wobei jedes spiralförmiges Wickelmodul (2, 2') mindestens eine Membranhülle (4) umfasst, welche um ein Permeatssammelrohr (8) gewickelt ist, und wobei die Permeatssammelrohre (8) jedes spiralförmigen Wickelmoduls (2, 2') fluidisch abgedichtet miteinander kommunizieren;
ein Permeatsadapterrohr (52), welches fluidisch abgedichtet mit dem Permeatssammelrohr (8) des ersten spiralförmigen Wickelmoduls (2) und mit der Permeatsauslassöffnung (44) kommuniziert, wobei das Permeatsadapterrohr (52) einen Innenumfang (58) definiert, welches angepasst ist, um Permeat zu enthalten; und
einen Spaltraum (56), der zwischen dem ersten spiralförmigen (2) und dem ersten Ende (38) angeordnet ist,
wobei die Anordnung **dadurch gekennzeichnet ist, dass** sie ein Überwachungssystem einschließt, das umfasst:
einen ersten Satz von Sensoren (60), welche den Innenumfang (58) des Permeatsadapterrohrs (52) kontaktieren; und
eine Mikroprozessoreinheit (62), welche in dem Spaltraum (56) angeordnet ist und mit dem ersten Satz von Sensoren (60) durch einen ersten Satz von Drähten (64) verbunden ist.

2. Anordnung nach Anspruch 1, wobei der erste Satz von Drähten (64) außerhalb des Innenumfangs (58) des Permeatsadapterrohrs (52) angeordnet ist.

3. Anordnung nach Anspruch 1, wobei die Mikroprozessoreinheit (62) mit einem zweiten Satz von Drähten (66) verbunden ist, welche sich durch die abnehmbare Endplatte (54) erstrecken und zur Verbindung mit einer Stromversorgungsquelle ausgebildet sind, welche außerhalb der Kammer (41) des Behälters (40) liegt.

4. Anordnung nach Anspruch 3, wobei der zweite Satz von Drähten (66) sich entlang des Innenumfangs (58) des Permeatsadapterrohrs (52) erstreckt.

5. Anordnung nach Anspruch 3, wobei der zweite Satz von Drähten (66) sich durch ein Loch erstreckt, welches in der abnehmbaren Endplatte bereitgestellt ist.

6. Anordnung nach Anspruch 2, wobei der zweite Satz von Drähten (66) sich von der Mikroprozessoreinheit (62) zu einer Mehrzahl von Steckern (72) erstreckt, und wobei die Stecker auf dem Permeatsadapterrohr (52) angeordnet sind und zur Verbindung mit einer Stromversorgungsquelle angepasst sind, welche außerhalb der Kammer (41) des Behälters (40) angeordnet ist.

7. Anordnung nach Anspruch 1, wobei die Mikroprozessoreinheit (62) an mindestens einem von der abnehmbaren Endplatte (38) und dem Permeatsadapterrohr (52) befestigt ist.

8. Anordnung nach Anspruch 1, wobei das Überwachungssystem ferner einen zweiten Satz von Sensoren (68) umfasst, welche in dem Spaltraum (56) außerhalb des Innenumfangs (58) des Permeatsadapterrohrs (52) angeordnet sind, wobei der zweite Satz von Sensoren (68) in einem Fluidströmungsmuster angeordnet ist, welcher sich vom ersten spiralförmigen Wickelelement (2) zu mindestens einer der Zuführeinlassöffnung (42) und der Konzentratauslassöffnung (42') erstreckt.

9. Anordnung nach Anspruch 8, wobei der zweite Satz von Sensoren (68) mit der Mikroprozessoreinheit (62) über einen dritten Satz von Drähten (70) verbunden ist, und wobei der dritte Satz von Drähten (70) außerhalb des Innenumfangs (58) des Permeatsadapterrohrs (52) angeordnet ist.

10. Anordnung nach Anspruch 1, ferner umfassend eine Mehrzahl von einzelnen spiralförmigen Wickelanordnungen nach Anspruch 1, wobei die Mikroprozessoreinheiten (62) jeder spiralförmigen Wickelanordnung mit einer gemeinsamen zentralen Prozessoreinheit verbunden sind.

## Revendications

1. Agencement de modules enroulés en spirale (39) comprenant :
un récipient sous pression (40) comprenant : une chambre (41) s'étendant le long d'un axe (X) entre une première extrémité (38) et une seconde extrémité (38'), au moins un orifice d'entrée d'alimentation (42), un orifice de sortie de concentré (42') et un orifice de sortie de perméat (44), et une plaque d'extrémité amovible (54) située à la première extrémité (38) du récipient, dans lequel l'orifice de sortie de perméat (44) s'étend axialement à travers la plaque d'extrémité amovible (54),
une pluralité de modules enroulés en spirale (2, 2') alignés axialement dans un agencement en série à l'intérieur de la chambre (41) avec un premier module (2) situé de façon adjacente à la première extrémité (38) et un second module (2') situé de façon adjacente à la seconde extrémité (38'), dans lequel chaque module enroulé en spirale (2, 2') comprend au moins une enveloppe de membrane (4) enroulée autour d'un tube de collecte de perméat (8), et dans lequel les tubes de collecte de perméat (8) de chaque module enroulé en spirale (2, 2') sont en communication de fluide hermétique l'un avec l'autre,
un tube adaptateur de perméat (52) en communication de fluide hermétique avec le tube de collecte de perméat (8) du premier module enroulé en spirale (2) et l'orifice de sortie de perméat (44), dans lequel le tube adaptateur de perméat (52) définit une périphérie intérieure (58) adaptée pour contenir du perméat, et
un espace d'intervalle (56) situé entre le premier module enroulé en spirale (2) et la première extrémité (38),
dans lequel l'agencement est **caractérisé en ce qu'**il inclut un système de surveillance comprenant :
un premier ensemble de capteurs (60) en contact avec la périphérie intérieure (58) du tube adaptateur de perméat (52), et
une unité de micro-traitement (62) située dans l'espace d'intervalle (56) et connectée au premier ensemble de capteurs (60) par un premier ensemble de fils (64).

2. Agencement selon la revendication 1, dans lequel le premier ensemble de fils (64) est situé à l'extérieur de la périphérie intérieure (58) du tube adaptateur de perméat (52).

3. Agencement selon la revendication 1, dans lequel l'unité de micro-traitement (62) est connectée à un second ensemble de fils (66) s'étendant à travers la plaque d'extrémité amovible (54) et adaptés pour se connecter à une source de courant située à l'extérieur de la chambre (41) du récipient (40).

4. Agencement selon la revendication 3, dans lequel le second ensemble de fils (66) s'étend le long de la périphérie intérieure (58) du tube adaptateur de perméat (52).

5. Agencement selon la revendication 3, dans lequel le second ensemble de fils (66) s'étend à travers un orifice disposé dans la plaque d'extrémité amovible (54).

6. Agencement selon la revendication 2, dans lequel le second ensemble de fils (66) s'étend à partir de l'unité de micro-traitement (62) jusqu'à une pluralité de connecteurs (72), et dans lequel les connecteurs sont situés sur le tube adaptateur de perméat (52) et sont adaptés pour se connecter à une source de courant située à l'extérieur de la chambre (41) du récipient (40).

7. Agencement selon la revendication 1, dans lequel l'unité de micro-traitement (62) est fixée à la plaque d'extrémité amovible (38) et au tube adaptateur de perméat (52).

8. Agencement selon la revendication 1, dans lequel le système de surveillance comprend en outre un second ensemble de capteurs (68) situés dans l'espace d'intervalle (56) à l'extérieur de la périphérie intérieure (58) du tube adaptateur de perméat (52), dans lequel le second ensemble de capteurs (68) est situé dans une configuration d'écoulement de fluide s'étendant à partir du premier élément enroulé en spirale (2) jusqu'à l'orifice d'entrée d'alimentation (42) et jusqu'à l'orifice de sortie de concentré (42').

9. Agencement selon la revendication 8, dans lequel le second ensemble de capteurs (68) est connecté à l'unité de micro-traitement (62) au moyen d'un troisième ensemble de fils (70), et dans lequel le troisième ensemble de fils (70) est situé à l'extérieur de la périphérie intérieure (58) du tube adaptateur de perméat (52).

10. Agencement selon la revendication 1, qui inclut en outre une pluralité d'agencements enroulés en spirale individuels selon la revendication 1, dans lequel les unités de micro-traitement (62) de chaque agencement enroulé en spirale sont connectées à une unité de traitement centrale commune.
